Europäisches Patentamt

European Patent Office

Office européen des brevets

(19)

(11) **EP 0 717 524 B1**

(12) **EUROPEAN PATENT SPECIFICATION**

(45) Date of publication and mention
of the grant of the patent:
**22.09.2004   Bulletin 2004/39**

(51) Int Cl.[7]: **H04J 14/02**, H04B 10/135

(21) Application number: **95308849.9**

(22) Date of filing: **06.12.1995**

(54) **Polarization modulation in wavelength division multiplexed transmission systems**

Polarisationsmodulation in Wellenlängen-Multiplex Übertragungssystemen

Modulation de polarisation dans des systèmes de transmission à multiplexage d'ondes

(84) Designated Contracting States:
**DE FR GB IT NL SE**

(30) Priority: **14.12.1994  US 355798**

(43) Date of publication of application:
**19.06.1996  Bulletin 1996/25**

(73) Proprietor: **Tyco Telecommunications (US) Inc.**
**Morristown, NJ 07960 (US)**

(72) Inventors:
 • **Bergano, Neal S.**
   **Lincroft, New Jersey 07738 (US)**
 • **Davidson, Carl R.**
   **Manalapan, New Jersey 07726 (US)**

(74) Representative: **Weitzel, David Stanley et al**
**Brookes Batchellor**
**102-108 Clerkenwell Road**
**London EC1M 5SA (GB)**

(56) References cited:
**EP-A- 0 615 356**          **DE-A- 3 716 247**
**US-A- 5 327 511**

 • **IEEE PHOTONICS TECHNOLOGY LETTERS, vol. 5, no. 10, September 1993, USA, pages 1244-1246, XP000644915 TAYLOR M G: "OBSERVATION OF NEW POLARIZATION DEPENDENCE EFFECT IN LONG HAUL OPTICALLY AMPLIFIED SYSTEM"**
 • **IEEE PHOTONICS TECHNOLOGY LETTERS, vol. 3, no. 6, 1 June 1991, pages 560-563, XP000227356 KYO INOUE: "ARRANGEMENT OF ORTHOGONAL POLARIZED SIGNALS FOR SUPPRESSING FIBER FOUR-WAVE MIXING IN OPTICAL MULTICHANNEL TRANSMISSION SYSTEMS"**
 • **COMMUNICATIONS - RISING TO THE HEIGHTS, DENVER, JUNE 23 - 26, 1991, vol. 1 OF 3, 23 June 1991, INSTITUTE OF ELECTRICAL AND ELECTRONICS ENGINEERS, pages 343-347, XP000269428 CAPONIO N ET AL: "DEMONSTRATION OF POLARISATION INDEPENDENT COHERENT TRANSMISSION BY SYNCHRONOUS INTRA-BIT POLARISATION SPREADING"**
 • **OPTICAL FIBER COMMUNICATION. SUMMARIES OF PAPERS PRESENTED AT THE CONFERENCE OFC '95, SAN DIEGO, FEB. 26 - MAR. 3, 1995, vol. 8, 26 February 1995, INSTITUTE OF ELECTRICAL AND ELECTRONICS ENGINEERS, pages 11-13, XP000517629 HEISMANN F: "FAST POLARIZATION CONTROLLERS AND SCRAMBLERS FOR HIGH-SPEED LIGHTWAVE SYSTEMS"**

## Description

## Technical Field

This invention relates to the optical transmission of information. More particularly, this invention relates to polarization modulation in wavelength division multiplexed transmission systems.

## Background of the Invention

Wavelength-division multiplexing is expected to be increasingly utilized in undersea and transcontinental terrestrial optical transmission systems due, in part, to the large bandwidth capacity such multiplexing provides. Unfortunately, wavelength division multiplexed transmission systems are susceptible to performance limitations due to polarization dependent effects, such as polarization-dependent hole burning in the erbium-doped fiber amplifiers that are typically used in such transmission systems, and cross-talk between the multiplexed channels. Polarization dependent hole burning is related to the population inversion dynamics of the erbium-doped fiber amplifiers. Cross-talk is primarily caused by the non-linear index of refraction of optical transmission fibers. Four-wave mixing is one significant deleterious effect that produces cross-talk. Accordingly, reducing four-wave mixing while simultaneously reducing polarization-dependent hole burning would be desirable in wavelength division multiplexed optical transmission systems.

## Summary of the Invention

Four-wave mixing between multiplexed channels in a wavelength division multiplexed optical transmission system, and the effects of polarization-dependent hole burning, are simultaneously reduced, in accordance with the invention, by a method and apparatus which provides for modulating a state-of-polarization of an optical signal so that an average value of the state-of-polarization over each modulation cycle is substantially equal to zero; and, orienting a state-of-polarization of at least one channel of the optical signal to be substantially orthogonal to a state-of-polarization of at least one other channel of the optical signal while maintaining the substantially zero average value of the state-of-polarization of the optical signal over each modulation cycle.

## Brief Description of the Drawings

FIG. 1 is a simplified block diagram of an illustrative example of an optical transmitter, in accordance with the invention.
FIG. 2 shows the states-of-polarization for channels contained in the optical signal which is output from the optical transmitter shown in FIG. 1, in accordance with the invention, at some arbitrary instant of time.
FIG. 3 is a simplified block diagram of a second illustrative example of an optical transmitter, in accordance with the invention.
FIG. 4 shows the states-of-polarization along a great circle trajectory on the Poincaré sphere for optical channels in the optical transmitter shown in FIG. 3, in accordance with the invention.
FIG. 5 is a simplified block diagram of a third illustrative example of an optical transmitter, in accordance with the invention.
FIG. 6 is a simplified block diagram of a fourth illustrative example of an optical transmitter, in accordance with the invention.
FIG. 7 is a simplified block diagram of a fifth illustrative example of an optical transmitter, in accordance with the invention.

## Detailed Description

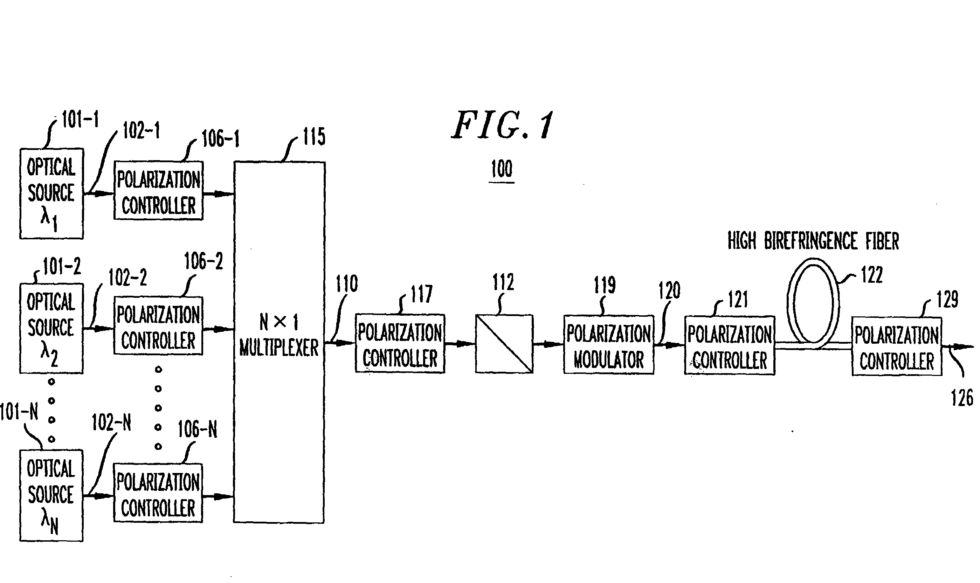

FIG. 1 is a simplified block diagram of an optical transmitter 100, in accordance with the invention. As shown, optical transmitter 100 includes a plurality of optical sources 101 for producing a plurality of optical channels 102; a plurality of polarization controllers 106, 117, 121, and 129; Nx1 multiplexer 115; polarizing filter 112; polarization modulator 119; and, high-birefringence fiber 122. These elements may be coupled using conventional means, for example, optical fibers, which could include polarization maintaining optical fibers where appropriate. Optical transmitter 100 is typically coupled, for example, to an optical transmission path and optical receiver (not shown) to form an optical transmission system. It is noted at the onset that the term "channel" as used herein refers to any optical phenomena that is defined by a unique wavelength. Thus, the term channel may refer to a component of a wavelength division multiplexed optical signal having a plurality of components, where each component has a different wavelength. Moreover, as used herein, the term channel may refer to a monochromatic optical signal.

The plurality of optical sources 101-1, 101-2, ... 101-N, which could be, for example, wavelength-tunable semiconductor lasers, are utilized to generate a plurality of continuous-wave optical signals each having a different wavelength, $\lambda_1, \lambda_2, ...\lambda_N$, respectively, as shown, thus defining a plurality of N optical channels 102-1, 102-2 ... 102-N. Optical sources 101 may be adapted such that optical channels 102 have substantially identical optical power. One or more of the optical sources 101 may be adapted so that optical channels 102 carry information supplied by data sources (not shown) using conventional techniques. The optical channels 102 generated by optical sources 101 pass through polarization controllers 106, and are received by Nx1 multiplexer 115. Polarization controllers 106 are used to orient the state-of-polarization ("SOP") of each optical channel 102 so that they all have substantially the same SOP. Those skilled in the art will recognize that the common SOPs may be represented as a single point on the Poincaré sphere. The Poincaré sphere is well known, being described, for example, by William A. Shurcliff, Polarized Light: Production and Use, Harvard University Press, 1962. Nx1 multiplexer 115 could be, for example, a wavelength-independent directional optical coupler that is known in the art. The output of Nx1 multiplexer is a wavelength division multiplexed optical signal 110 having N channels, where each channel is defined by a different wavelength $\lambda_1$, $\lambda_2$, ...$\lambda_N$. For discussion purposes, the channels may be sequentially numbered 1, 2, ... N, from lowest to highest wavelength. In this illustrative example of the invention, for reasons that are discussed below, the channel wavelengths are uniformly spaced, for example, by 1 nm. However, in other applications of the invention it may be desirable to utilize non-uniform channel wavelength spacing. For example, it is known that non-uniform channel wavelength spacing can help reduce the effects of four-wave mixing.

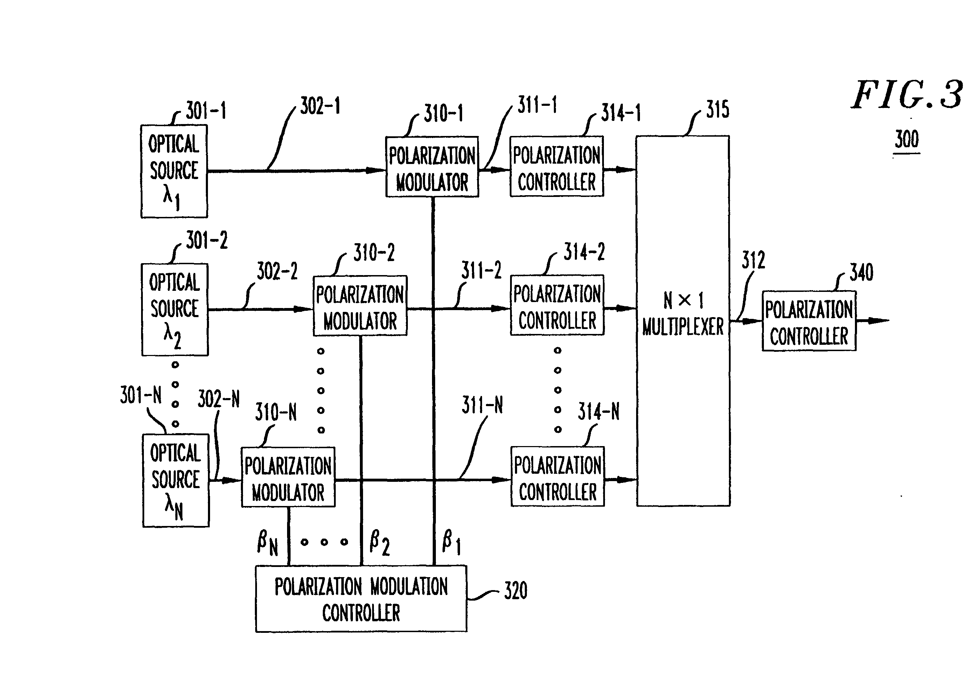

Wavelength division multiplexed optical signal 110 passes from Nx1 multiplexer 115 to polarization modulator 119 after passing through polarization controller 117 and polarizing filter 112. Polarization modulator 119 operates to continuously modulate the SOP of wavelength division multiplexed optical signal 110 so that no one polarization state is preferred during a time interval corresponding to one modulation cycle of polarization modulator 119. Thus, the polarization-modulated wavelength division multiplexed optical signal 120 output from polarization modulator 119 is essentially unpolarized, that is, the average value of its SOP over the modulation time interval is substantially equal to zero. Advantageously, such polarization modulation may significantly reduce the negative effects of polarization-dependent hole burning. In one modulation cycle, polarization modulator 119 may modulate the SOP of wavelength division multiplexed optical signal 110 so that it traces a complete great circle on the Poincaré sphere. Alternatively, the SOP may reciprocate about the trajectory on the Poincaré sphere without tracing a complete great circle. Regardless of the particular trajectory chosen, it is important that the average value of the SOP over the modulation cycle be substantially equal to zero. Polarization modulators are known, and are often called polarization "scramblers." In this illustrative example, it is intended that polarization modulator 119 be of a type that is disclosed in United States patent 5,327,511 (see, particularly figure 3 of that patent). Those skilled in the art will appreciate that polarization modulator 119 in this illustrative example is a polarization-dependent device, as are other known polarization modulators. Therefore, it may be desirable in some applications of the invention to utilize a strongly polarized input signal to polarization modulator 119. Accordingly, FIG. 1 shows polarizing filter 112 disposed at the input to polarization modulator 119. Polarizing filters are known. Polarization controller 117 is utilized to orient the SOP of the wavelength division multiplexed signal 110 to maximize the signal power transmitted to polarizing filter 112. It should be noted that polarizing filter 112 and polarization controller 117 are not required to facilitate the practice of the invention and, thus, should be considered optional. Alternatively, the functions of polarizing filter 112 may be incorporated directly into polarization modulator 119.

The polarization modulated wavelength division multiplexed optical signal 120 output from polarization modulator 119 is transmitted to high-birefringence fiber 122 via polarization controller 121. Polarization controllers and high-birefringence fibers are known. Polarization controller 121 may be, for example, the Lefevre-type polarization controller described by H.C. Lefevre in IEEE Electronics Letters, Vol. 16, p. 778, 1980. High-birefringence fiber 122 is selected so that the birefringence is described by:

$$\Delta\tau = \frac{1}{2\Delta f} \qquad (1)$$

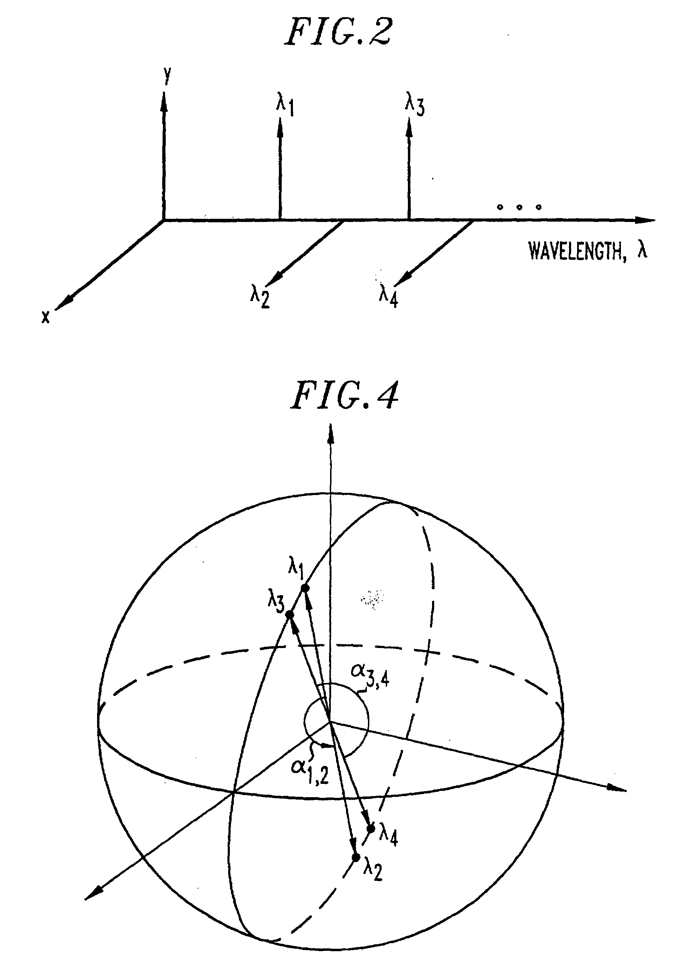

where $\Delta\tau$ is the propagation delay difference between the fiber's fast and slow axes and $\Delta\bar{f}$ is the average frequency separation of the N multiplexed channels. Polarization controller 121 is utilized to place the great circle polarization modulation trajectory of the polarization-modulated wavelength multiplexed optical signal 120 into a plane which is perpendicular to a line on the Poincaré sphere which joins the fast and slows axes of high-birefringence fiber 122. Those skilled in the art will appreciate that, due to above-described uniform channel wavelength spacing and selection of total birefringence according to equation (1), the odd-numbered channels of polarization-modulated wavelength division multiplexed optical signal 120 will emerge from high-birefringence fiber 122 with SOPs that are substantially orthogonal to the SOPs of the even-numbered channels. FIG. 2 illustrates this orthogonal relationship of SOPs for the channels in optical output signal 126 which is output at the end of high-birefringence fiber 122 at some arbitrary instant in time. If non-uniform channel wavelength spacing is utilized, then the SOPs will not be as closely orthogonal as when uniform channel wavelength spacing is utilized. However, the results obtained in the non-uniform case may still be satisfactory for some applications of the invention. The more preferred substantially orthogonal relationship between SOPs of odd and even-numbered channels advantageously limits the four-wave mixing products that can be generated in optical transmitter 100 and the optical transmission path to which it is typically coupled. Referring to FIG. 2, it will be evident that this desirable result is achieved because neighboring channels, for example channels $\lambda_1$ and $\lambda_2$, are substantially precluded from interacting due to their orthogonal SOPs. Channels sharing the same SOP, for example channels $\lambda_1$ and $\lambda_3$, are separated far enough apart in wavelength such that the amplitude of resultant mixing products is minimal. In addition to the substantially orthogonal relationship between SOPs of odd and even-numbered channels, all the channels are simultaneously moving about a great circle polarization modulation trajectory, as discussed above, such that the substantially zero average value of the SOP of optical signal 126 is maintained. Thus, in accordance with the principles of the invention, polarization-dependent hole burning and four-wave mixing in wavelength division multiplexed optical transmission systems may be simultaneously and significantly reduced.

FIG. 3 shows a simplified block diagram of a second illustrative optical transmitter 300, in accordance with the invention. As shown, optical transmitter 300 includes a plurality of optical sources 301 for producing a plurality of continuous-wave optical channels 302; a plurality of polarization modulators 310; a plurality of polarization controllers 314 and 340; Nx1 multiplexer 315; and, polarization modulation controller 320. These elements may be coupled using conventional means, for example, optical fibers, which could be polarization maintaining optical fibers where appropriate. Optical transmitter 300 is typically coupled, for example, to an optical transmission path and optical receiver (not shown) to form an optical transmission system.

The plurality of optical sources 301-1, 302-2, ... 301-N generate a plurality of optical signals each having a different wavelength, $\lambda_1, \lambda_2, ...\lambda_N$, respectively, as shown, thus defining a plurality of N optical channels 302-1, 302-2, ... 302-N. Optical sources 301 may be adapted such that optical channels 302 have substantially identical optical power. In this illustrative example, each optical channel 302 passes through individual polarization modulators 310 and individual polarization controllers 314. Polarization modulators 310-1, 310-2, ... 310-N modulate the SOPs of optical channels 302-1, 302-2. ... 302-N, respectively, in response to polarization modulation control signals $\beta_1$, $\beta_2 ... \beta_N$, respectively, generated by polarization modulation controller 320. The polarization modulation control signals $\beta_1, \beta_2 ... \beta_N$ may be, for example, sinusoidal signals described by:

$$\beta_1(t) = A_1 e^{\omega_1 t + \delta_1} \qquad i = 1,2,...N \qquad (2)$$

where $\omega$ is the polarization modulation frequency and $\delta$ is the relative phase. In this illustrative example, $\omega$ is constant, that is $\omega_1 = \omega_2 = \omega_N = \omega$, while $\delta$ and $A$ may be variable. For example, the amplitude $A$ may be adjusted such that the average values of SOPs of the optical channels are substantially equal to zero. In a similar manner as in FIG. 1, polarization modulators 310 operate to continuously modulate the SOP optical channels 302 so that no one polarization state is preferred during a time interval corresponding to one modulation cycle of polarization modulators 310. Thus, each of the optical channels 302 output from polarization modulators 310, as well as the wavelength division multiplexed optical signal 312 emerging from Nx1 multiplexer 315, are essentially unpolarized, that is, the average value of their SOPs over the modulation time interval is substantially equal to zero. In one modulation cycle, each polarization modulator 310 may modulate the SOP of an optical channel 302 so that it traces a complete great circle on the Poincaré sphere. Alternatively, the SOP may reciprocate about the trajectory on the Poincaré sphere without tracing a complete great circle. Regardless of the particular trajectory chosen, it is important that the average value of the SOP of wavelength division multiplexed optical signal 312 over the modulation cycle be substantially equal to zero. Although it is intended that each of the polarization modulators 310 be locked to the single polarization modulation frequency $\omega$, it is possible that some particular examples of commercially available polarization modulators may undesirably drift from the lock value. The practice of the invention with some frequency drift may still provide satisfactory results in some applications of the invention. However, it should be noted that the illustrative example of the invention shown while referring to FIG. 1 which utilizes a single polarization modulator may be more preferable in some application of the invention because drift in this arrangement is less of a concern since it does not affect the desired orthogonal relationship between SOPs of odd and even-numbered optical channels.

The polarization modulated optical channels 311 emerging from polarization modulators 310 are received by Nx1 multiplexer 315 where they are combined into a single wavelength division multiplexed optical signal 312. A polarization controller 340 may be optionally utilized at the output of Nx1 multiplexer 315 to set the launch orientation of the SOP of the wavelength division multiplexed output signal into the transmission path. It is noted that polarization controller 340 merely provides additional flexibility in polarization control since it is evident that the launch orientation of the wavelength division multiplexed output signal may also be set using polarization controllers 314 by themselves.

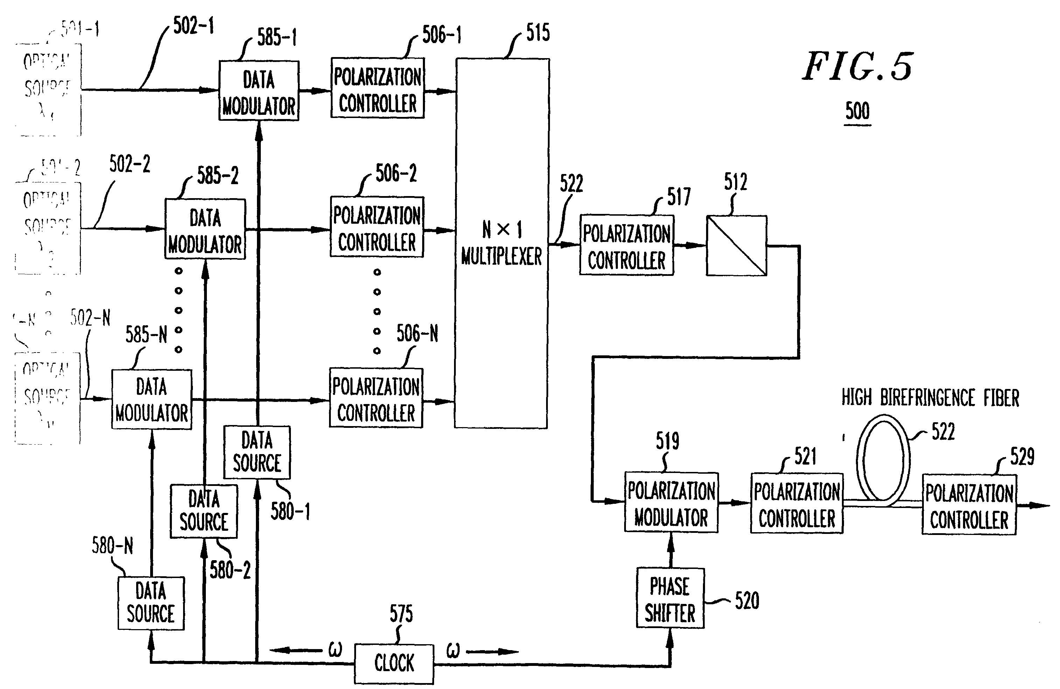

The polarization modulation described above results in the average value of the SOP of each optical channel 302 being substantially equal to zero over each modulation cycle. Therefore, the average value of the SOP of wavelength division multiplexed optical signal 312 is also substantially equal to zero over each modulation cycle. By selectively varying the relative phase of the modulation frequency drive signals, $\delta_i$ in equation (2), using polarization modulation controller 320, and by adjusting polarization controllers 314, all of the SOPs of the polarization-modulated optical signals 312 emerging from Nx1 multiplexer 315 are separated along some great circle trajectory on the Poincaré sphere as shown in FIG. 4. For purposes of clarity in exposition but not as a limitation on the invention, only SOPs for four exemplary optical channels are illustrated in FIG. 4, that is N=4. Alternatively, it is may be desirable to incorporate a fixed amount of phase offset $\delta$ into polarization modulators 310, thus making polarization modulation controller optional. In accordance with the principles of the invention, the above-described particular great circle is selected to be the same great circle as utilized by polarization modulators 310. Those skilled in the art will recognize that polarization controllers 314 are utilized in this illustrative example of the invention to orient the SOPs of optical signals from polarization modulators 310 into the same great circle trajectory. The separation between SOPs of optical signals having neighboring wavelengths, is conveniently described by a separation angle $\alpha_{i,j}$ on the Poincaré sphere, as shown in FIG. 4, where the *i* and *j* subscripts identify neighboring optical channels. In accordance with the principles of the invention, separation angle $\alpha_{i,j}$ are approximately 180°, such that SOPs of odd-numbered channels are substantially orthogonal to even-numbered channels.

FIG. 5 is a simplified block diagram of a third illustrative example of an optical transmitter 500, in accordance with the invention. As shown, optical transmitter 500 includes a plurality of data sources 580, a plurality of data modulators 585; a plurality of optical sources 501 for producing a plurality of optical channels 502; a plurality of polarization controllers 506, 517, 521, and 529; Nx1 multiplexer 515; polarizing filter 512; polarization modulator 519; clock 575; phase shifter 520; and, high-birefringence fiber 522. These elements may be coupled using conventional means, for example, optical fibers, which could include polarization maintaining optical fibers where appropriate. Optical transmitter 500 is typically coupled, for example, to an optical transmission path and optical receiver (not shown) to form an optical transmission system. It is noted that these elements are similar in form, arrangement, and operation to those shown in FIG. 1 with the additions of data sources 580, data modulators 585, phase shifter 520 and clock 575. These additional elements are utilized to synchronize data and phase modulation, as discussed below, which may be advantageous in certain applications of the invention. Additional discussion of data and polarization modulation synchronization may be found in my co-pending European patent application Serial No. 95306638.8 (publication number EP 0704996).

Data modulators 585 receive data to be imparted to the optical channels 502 from data sources 580 and modulate the optical channels 502 at a frequency determined by clock 575. In accordance with the principles of the invention, clock 575 also drives polarization modulator 519 via a variable delay line, for example, phase shifter 520 as shown, so that the SOP of the wavelength division optical signal 522 emerging from Nx1 multiplexer 515 is polarization modulated at a rate equal to the rate at which data is imparted to the optical channels 502. Thus, clock 575 causes the rate of polarization modulation to be frequency and phase locked to the rate of data modulation. While phase shifter 520 is shown in FIG. 5, it contemplated that any variable-delay line may be used. Those skilled in the art will recognize that phase shifter 520 is utilized to adjust the relative timing between the polarization and data modulation. This relative timing adjustment may also be implemented using a plurality of variable delay lines, where one delay line is disposed between each data modulator 585 and Nx1 multiplexer 515 either upstream or downstream of polarization controllers 506. A plurality of variable delay lines may also be utilized between clock 575 and data modulators 585, either upstream or downstream of data sources 580. As the above alternatives show, the relative timing adjustment between polarization and phase modulation may be effectuated, in accordance with the invention, by introducing delay on the plurality of optical channels, or by introducing delay on the wavelength division multiplexed optical signal, or by utilizing combinations thereof. It is noted that the scope of the invention is intended to include the performance of synchronous data and polarization modulation on all optical channels, or selected optical channels. Such synchronous polarization and data modulation advantageously provides for a wavelength division multiplexed transmitter having a near optimal balance between low speed and high speed polarization modulation which minimizes the deleterious effects of AM modulation caused by low speed modulation and increased bandwidth caused by high speed modulation.

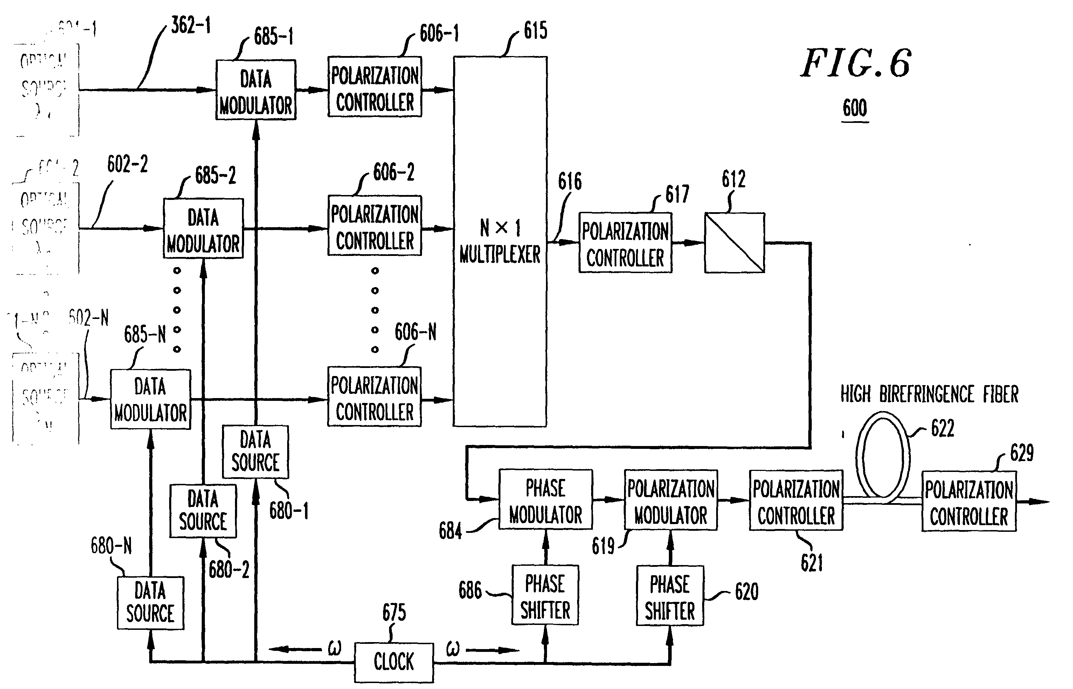

FIG. 6 is a simplified block diagram of a fourth illustrative example of an optical transmitter, in accordance with the invention. As shown, optical transmitter 600 includes a plurality of data sources 680; a plurality of data modulators 685; a plurality of optical sources 601 for producing a plurality of optical channels 602; a plurality of polarization controllers 606, 617, 621, and 629; Nx1 multiplexer 615; polarizing filter 612; polarization modulator 619; clock 675; phase shifters 620 and 686; high-birefringence fiber 622; and, optical phase modulator 684. It is noted that the elements shown in FIG. 6 are similar in form; arrangement, and operation to those shown in FIG. 5, with the additions of optical phase modulator 684 and a variable delay line, which could be, for example, phase shifter 686 as shown. Clock 675 simultaneously drives both polarization modulator 619 and phase modulator 684 via phase shifters 620 and 686, respectively. Optical phase modulator 684 modulates the optical phase of wavelength division multiplexed optical signal 610 without modulating the polarization of the signal. Those skilled in the art will recognize that optical phase modulator can be adapted to impart a fixed amount of phase shift to the wavelength division multiplexed optical signal 616 emerging from Nx1 multiplexer 615. In such a case, phase shifter 686 may be deleted. However, it is preferable in many applications of the invention to selectively vary the amount of phase shift using phase shifter 686, as shown. In accordance with the invention, by introducing excess phase modulation, various amplitude errors that adversely effect performance of wavelength division multiplexed transmission systems when using a non-return to zero modulation format can advantageously be reduced. The manner in which clock 675 drives polarization modulator 619 and phase modulator 684, and the operational details of phase shifters 620 and 685 are described in my co-pending European patent application Serial No. 95306638.8 (publication number EP 0704996). It is noted that the functions of phase modulator 684 may be incorporated directly into polarization modulator 619, which may be desirable in some applications of the invention, in which case phase modulator 684 may be deleted.

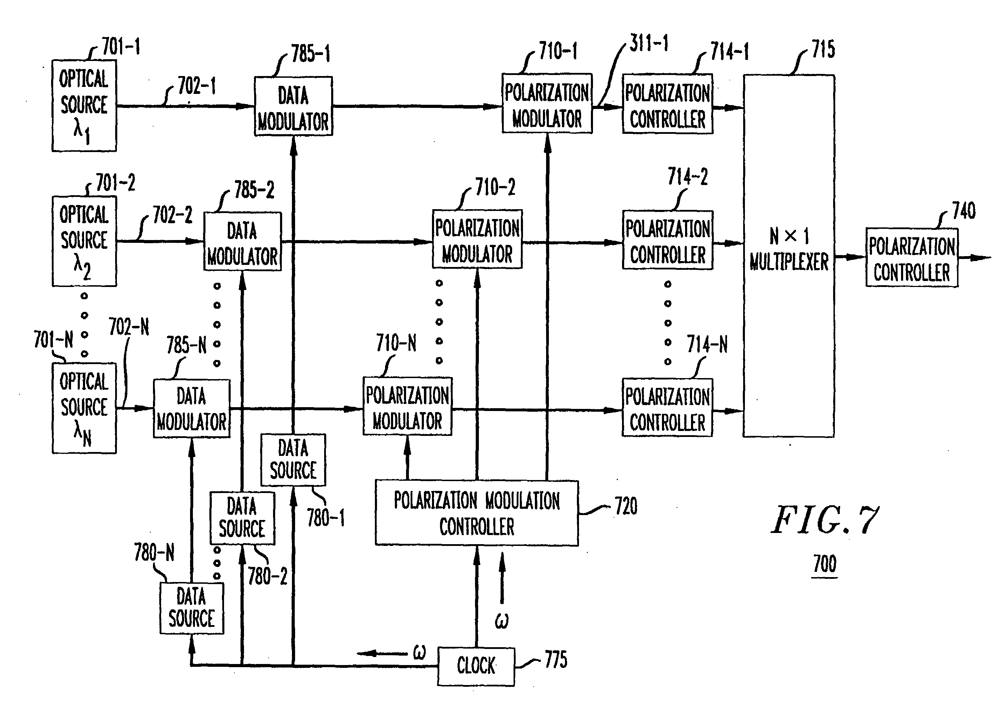

FIG. 7 is a simplified block diagram of an fifth illustrative example of an optical transmitter 700, in accordance with the invention. As shown, optical transmitter 700 includes a plurality of data sources 780, a plurality of data modulators 785, a plurality of optical sources 701 for producing a plurality of optical channels 702; a plurality of polarization modulators 710; a plurality of polarization controllers 714 and 740; Nx 1 multiplexer 715; polarization modulation controller 720; and, clock 775. These elements may be coupled using conventional means, for example, optical fibers, which could include polarization maintaining optical fibers where appropriate. Optical transmitter 700 is typically coupled, for example, to an optical transmission path and optical receiver (not shown) to form an optical transmission system. It is noted that the elements shown in FIG. 7 are similar in form, arrangement, and operation to those shown in FIG. 3 with the addition of data sources 780, data modulators 785, and clock 775.

Data modulators 785 receive data to be imparted to the optical signals 702 from data sources 780 and modulate the optical channels 702 at a frequency determined by clock 775. In accordance with the principles of the invention, clock 775 also drives polarization modulators 710 so that the SOP of optical channels 702 are polarization modulated at a rate equal to the rate at which data is imparted to the optical channels 702. This synchronous data and polarization modulation is performed in a similar manner as that described when referring to FIG. 5. It will be appreciated by those skilled in the art that the variable delay line, such as a phase shifter, utilized in the previous illustrative example of synchronous data and polarization modulation, is not required in this illustrative example of the invention because phase delay is readily performed by polarization modulators 710 under the control of polarization modulation controller 720. Moreover, the excess phase modulation technique described when referring to FIG. 6 may also be performed by polarization modulators 710 under the control of polarization modulation controller 720, because the relative phase between optical channels 702 may be readily varied as described above when referring to FIG. 3. Alternatively, variably delay lines may also be utilized to introduce a phase adjustment between the data and phase modulation, as in FIG. 6. In such a case, a variable delay line, such as a phase shifter, is disposed between each data modulator 785 and polarization modulator 710, and is coupled to clock 775.

It will be understood that the particular techniques described above are only illustrative of the principles of the present invention, and that various modifications could be made by those skilled in the art without departing from the scope of the present invention, which is limited only by the claims that follow.

**Claims**

1. A method for modulating a state-of-polarization of an optical signal, comprising the steps of:

   modulating the state-of-polarization of the optical signal so that an average value of said state-of-polarization over each modulation cycle is substantially equal to zero;
   **characterised in that** said optical signal includes a plurality of optical channels;
   and by orienting a state-of-polarization of at least one channel of said optical signal to be substantially orthogonal to a state-of-polarization of at least one other channel of said optical signal while maintaining said substantially zero average value of said state-of-polarization of said optical signal over each modulation cycle.

2. The method as claimed in claim 1 wherein said plurality of optical channels are sequentially numbered from 1 to N from lowest to highest wavelength and said orienting further includes orienting predetermined odd-numbered optical channels to be substantially orthogonal to predetermined even-numbered optical channels.

3. The method as claimed in claim 1 wherein said plurality of optical channels are wavelength division multiplexed optical channels.

4. The method as claimed in claim 1 wherein said at least one channel of said optical signal and said at least one other channel of said optical signal have substantially identical optical powers.

5. The method as claimed in claim 3 wherein said plurality of wavelength division multiplexed optical channels are produced by a plurality of optical sources.

6. The method as claimed in claim 5 wherein at least one of said optical sources comprises a laser.

**7.** The method as claimed in claim 6 wherein said laser comprises a wavelength tunable laser.

**8.** The method as claimed in claim 6 wherein said laser generates a continuous wave optical signal.

**9.** The method as claimed in claim 3 further including the step of modulating data onto at least one channel of said wavelength division multiplexed optical signal at a predetermined frequency.

**10.** The method as claimed in claim 9 wherein said modulating said state-of-polarization includes a step of modulating at a frequency that is phased locked and substantially equal to said predetermined frequency so that said state-of-polarization over each modulation cycle is substantially equal to zero.

**11.** The method as claimed in claim 10 further including a step of selectively varying the phase of the polarization modulation imparted to said optical signal.

**12.** The method as claimed in claim 9 further including a step of selectively phase modulating said optical signal while imparting substantially no polarization modulation to said optical signal.

**13.** The method as claimed in claim 12 wherein said step of selectively phase modulating includes the step of selectively phase modulating said optical signal at a frequency equal to said predetermined frequency at which data is modulated.

**14.** An apparatus for modulating a state-of-polarization of an optical signal, the apparatus comprising:

a means for modulating a state-of-polarization of an optical signal so that an average value of said state-of-polarization over each modulation cycle is substantially equal to zero; **characterised in that** the optical signal is a wavelength division multiplexed optical signal, said optical signal having a plurality of wavelength division multiplexed channels; and by a means for orienting a state-of-polarization of at least one channel of said optical signal to be substantially orthogonal to a state-of-polarization of at least one other channel of said optical signal while maintaining said substantially zero average value of said state of polarization of said optical signal over each modulation cycle.

**15.** The apparatus as claimed in claim 14 wherein said plurality of optical channels are sequentially numbered from 1 to N from lowest to highest wavelength and said means for orienting further includes a means for orienting predetermined odd-numbered optical channels to be substantially orthogonal to predetermined even-numbered optical channels.

**16.** An optical transmitter **characterised in that** it is arranged for transmitting a wavelength division multiplex optical signal, said transmitter including a plurality of 1,2,....N optical sources for generating a plurality of N optical channels, comprising:

a plurality of 1,2,....N polarization modulators coupled to corresponding ones of said plurality of optical sources for modulating a state-of-polarization of said optical channels so that an average value of said state-of-polarization over a modulation cycle is substantially equal to zero; a plurality of 1,2,... N polarization controllers coupled to corresponding ones of said plurality of polarization modulators for orienting said modulated state-of-polarization of said optical channels onto substantially a same point on a Poincaré sphere; and an Nx1 multiplexer coupled to said plurality of polarization controllers for combining said plurality of optical channels into a wavelength division multiplexed optical signal;

wherein predetermined ones of said plurality of polarization controllers are adapted so that at least one optical channel emerges from said Nx1 multiplexer having a state-of-polarization that is substantially orthogonal to a state-of-polarization of at least one other optical channel while maintaining said substantially zero average value of said state-of-polarization of said plurality of optical channels over each modulation cycle.

**Patentansprüche**

**1.** Verfahren zur Modulation des Polarisationszustands eines optischen Signals, umfassend die Schritte:

Modulation des Polarisationszustands eines optischen Signals, derart, daß ein Durchschnittswert des Polarisationszustands über jeden Modulationszyklus im wesentlichen gleich null ist;

**dadurch gekennzeichnet, daß** das optische Signal eine Vielzahl optischer Kanäle umfaßt; und Orientierung eines Polarisationszustands von wenigstens einem Kanal des optischen Signals zu einer im wesentlichen orthogonalen Ausrichtung zu dem Polarisationszustand des wenigstens einen anderen Kanals des optischen Signals, während der im wesentlichen Null-Durchschnittswert des Polarisationszustands des optischen Signals über jeden Modulationszyklus aufrechterhalten wird.

2. Verfahren nach Anspruch 1, wobei die Vielzahl der optischen Kanäle sequentiell von 1 bis N von der niedrigsten zur höchsten Wellenlänge numeriert sind und die Orientierung weiter orientierte, vorbestimmte, ungerade optische Kanäle umfaßt, die im wesentlichen orthogonal zu den vorbestimmten geradzahligen optischen Kanälen orientiert sind.

3. Verfahren nach Anspruch 1, wobei die Vielzahl optischer Kanäle optische Teilwellenlängen-Multiplex-Kanäle sind.

4. Verfahren nach Anspruch 1, wobei wenigstens ein Kanal des optischen Signals und wenigstens ein anderer Kanal des optischen Signals identische optische Leistungsfähigkeit aufweisen.

5. Verfahren nach Anspruch 3, wobei die Vielzahl der optischen Teilwellenlängen-Multiplex-Kanäle durch eine Vielzahl optischer Quellen erzeugt wird.

6. Verfahren nach Anspruch 5, wobei wenigstens eine der optischen Quellen einen Laser umfaßt.

7. Verfahren nach Anspruch 6, wobei der Laser einen wellenlängenabstimmbaren Laser umfaßt.

8. Verfahren nach Anspruch 6, wobei der Laser ein kontinuierliches optisches Wellensignal erzeugt.

9. Verfahren nach Anspruch 3, weiter umfassend den Schritt der Datenmodulierung auf wenigstens einen Kanal des optischen Teilwellenlängen-Multiplex-Signals bei einer vorbestimmten Frequenz.

10. Verfahren nach Anspruch 9, wobei das Modulieren des Polarisationszustands einen Modulationsschritt bei einer Frequenz umfaßt, die phasenstarr ist und im wesentlichen gleich zu der vorbestimmten Frequenz ist, so daß der Polarisationszustand über jeden Modulationszyklus im wesentlichen gleich null ist.

11. Verfahren nach Anspruch 10, weiter umfassend einen Schritt der selektiven Phasenvariierung der Polarisationsmodulation, übertragen auf das optische Signal.

12. Verfahren nach Anspruch 9, weiter umfassend einen Schritt der selektiven Phasenmodulation des optischen Signals, während im wesentlichen keine Polarisationsmodulation auf das optische Signal übertragen wird.

13. Verfahren nach Anspruch 12, wobei der Schritt der selektiven Phasenmodulation einen Schritt einer selektiven Phasenmodulation des optischen Signals bei einer Frequenz aufweist, die gleich zu der vorbestimmten Frequenz ist, bei der Daten moduliert werden.

14. Vorrichtung zur Modulation des Polarisationszustands eines optischen Signals, wobei die Vorrichtung umfaßt:

Mittel zur Modulation des Polarisationszustands eines optischen Signals, derart, daß ein Durchschnittswert des Polarisationszustands über jeden Modulationszyklus im wesentlichen gleich null ist; **dadurch gekennzeichnet, daß** das optische Signal ein optisches Teilwellenlängen-Multiplex-Signal ist, wobei das optische Signal eine Vielzahl von teilwellenlängen-multiplexen Kanälen aufweist;

und durch Mittel zu einer im wesentlichen orthogonalen Orientierung eines Polarisationszustands von wenigstens einem Kanal des optischen Signals zu dem Polarisationszustand von wenigstens einem anderen Kanal des optischen Signals, während der im wesentlichen Null-Durchschnittswert des Polarisationszustands des optischen Signals über jeden Modulationszyklus aufrechterhalten wird.

15. Vorrichtung nach Anspruch 14, wobei die Vielzahl optischer Kanäle sequentiell von 1 bis N von der niedrigsten bis zur höchsten Wellenlänge numeriert ist und die Mittel zur Orientierung weiter ein Mittel zur im wesentlichen orthogonalen Orientierung der vorbestimmten, ungeraden optischen Kanäle zu vorbestimmten, geraden optischen Kanälen umfassen.

16. Optischer Sender, **dadurch gekennzeichnet, daß** er zum Senden eines optischen Teilwellenlängen-Multiplex-Signals ausgebildet ist, wobei der Sender eine Vielzahl von 1, 2,...N optischen Quellen zur Erzeugung einer Vielzahl von N optischen Kanälen umfaßt, umfassend:

eine Vielzahl von 1,2,...N Polarisationsmodulatoren, die mit korrespondierenden der Mehrzahl der optischen Quellen gekoppelt sind zur Modulation eines Polarisationszustands der optischen Kanäle, so daß der Durchschnittswert des Polarisationszustands über einen Modulationszyklus im wesentlichen gleich null ist;

eine Mehrzahl von 1,2,...N Polarisationscontrollern, die mit korrespondierenden der Vielzahl der Polarisationsmodulatoren gekoppelt sind zur Orientierung des modulierten Polarisationszustands der optischen Kanäle auf einen im wesentlichen gleichen Punkt auf einer Poincare-Kugel; und

einen Nx1-Multiplexer, der mit einer Vielzahl von Polarisationscontrollern verbunden ist zur Kombinierung der Vielzahl optischer Kanäle in ein optisches Teilwellenlängen-Multiplex-Signal;

wobei vorbestimmte der Vielzahl der Polarisationscontroller derart ausgebildet sind, daß wenigstens ein optischer Kanal von dem Nx1-Multiplexer mit einem Polarisationszustand entsteht, der im wesentlichen orthogonal zu dem Polarisationszustand des wenigstens einen anderen optischen Kanals ist, während der im wesentlichen Null-Durchschnittswert des Polarisationszustands der Vielzahl der optischen Kanäle über jeden Modulationszyklus aufrechterhalten wird.

## Revendications

1. Procédé de modulation d'un état de polarisation d'un signal optique, comprenant les étapes consistant à :

moduler l'état de polarisation du signal optique de sorte qu'une valeur moyenne dudit état de polarisation sur chaque cycle de modulation soit essentiellement égale à zéro ; **caractérisé en ce que** ledit signal optique comprend une pluralité de canaux optiques ;
et orienter un état de polarisation d'au moins un canal dudit signal optique de façon à être substantiellement orthogonal à un état de polarisation d'au moins un autre canal dudit signal optique tout en conservant ladite valeur moyenne essentiellement égale à zéro dudit état de polarisation dudit signal optique sur chaque cycle de modulation.

2. Procédé selon la revendication 1, dans lequel ladite pluralité de canaux optiques est numérotée de manière séquentielle de 1 à N de la longueur d'onde la plus faible à la plus élevée et ladite orientation comprend en outre une orientation des canaux optiques impairs prédéterminés de façon à ce qu'ils soient substantiellement orthogonaux aux canaux optiques pairs prédéterminés.

3. Procédé selon la revendication 1, dans lequel ladite pluralité de canaux optiques sont des canaux optiques multiplexés par division de longueur d'onde.

4. Procédé selon la revendication 1, dans lequel ledit au moins un canal dudit signal optique et ledit au moins un autre canal dudit signal optique ont essentiellement des puissances optiques identiques.

5. Procédé selon la revendication 3, dans lequel ladite pluralité de canaux optiques multiplexés par division de longueur d'onde est produite par une pluralité de sources optiques.

6. Procédé selon la revendication 5, dans lequel au moins une desdites sources optiques comprend un laser.

7. Procédé selon la revendication 6, dans lequel ledit laser comprend un laser de longueur d'onde accordable.

8. Procédé selon la revendication 6, dans lequel ledit laser génère un signal optique à onde continue.

9. Procédé selon la revendication 3, comprenant en outre l'étape consistant à moduler des données sur au moins un canal dudit signal optique multiplexé par division de longueur d'onde selon une fréquence prédéterminée.

10. Procédé selon la revendication 9, dans lequel ladite modulation dudit état de polarisation comprend une étape consistant à moduler à une fréquence qui est verrouillée en phase et substantiellement égale à ladite fréquence prédéterminée de sorte que ledit état de polarisation sur chaque cycle de modulation soit substantiellement égal à zéro.

11. Procédé selon la revendication 10, comprenant en outre une étape consistant à faire varier de manière sélective la phase de la modulation de polarisation transmise au dit signal optique.

12. Procédé selon la revendication 9, comprenant en outre une étape consistant à moduler de manière sélective la phase dudit signal optique tout en ne transmettant essentiellement aucune modulation de polarisation au dit signal optique.

13. Procédé selon la revendication 12, dans lequel l'étape consistant à moduler de manière sélective la phase comprend l'étape consistant à moduler de manière sélective la phase dudit signal optique à une fréquence égale à ladite fréquence prédéterminée à laquelle les données sont modulées.

14. Appareil pour moduler un état de polarisation d'un signal optique ; l'appareil comprenant :

un moyen pour moduler un état de polarisation d'un signal optique de sorte qu'une valeur moyenne dudit état de polarisation sur chaque cycle de modulation soit essentiellement égale à zéro ; **caractérisé en ce que** ledit signal optique est un signal optique multiplexé par division de longueur d'onde, ledit signal optique ayant une pluralité de canaux multiplexés par division de longueur d'onde ;

et un moyen pour orienter un état de polarisation d'au moins un canal dudit signal optique de façon à ce qu'il soit substantiellement orthogonal à un état de polarisation d'au moins un autre canal dudit signal optique tout en conservant ladite valeur moyenne essentiellement égale à zéro dudit état de polarisation dudit signal optique sur chaque cycle de modulation.

15. Appareil selon la revendication 14, dans lequel ladite pluralité de canaux optiques sont numérotés de manière séquentielle de 1 à N de la longueur d'onde la plus faible à la plus élevée et ledit moyen d'orientation comprend en outre un moyen pour orienter des canaux optiques impairs prédéterminés de façon à ce qu'ils soient substantiellement orthogonaux à des canaux optiques pairs prédéterminés.

16. Emetteur optique **caractérisé en ce qu'**il est agencé pour transmettre un signal optique multiplexé par division de longueur d'onde, ledit émetteur comprenant une pluralité de sources optiques 1, 2,, N pour générer une pluralité de canaux optiques N, comprenant :

une pluralité de modulateurs de polarisation 1, 2,, N couplés à des modulateurs correspondants de ladite pluralité de sources optiques pour moduler un état de polarisation desdits canaux optiques de sorte qu'une valeur moyenne dudit état de polarisation sur un cycle de modulation soit essentiellement égale à zéro ;

une pluralité de contrôleurs de polarisation 1, 2, ... N couplés à des contrôleurs correspondants de ladite pluralité de modulateurs de polarisation pour orienter ledit état de polarisation modulé desdits canaux optiques sur substantiellement un même point sur une sphère de Poincaré ; et

un multiplexeur Nx1 couplé à ladite pluralité de contrôleurs de polarisation pour combiner ladite pluralité de canaux optiques dans un signal optique multiplexé par division de longueur d'onde ;

dans lequel les contrôleurs prédéterminés de ladite pluralité de contrôleurs de polarisation sont adaptés de sorte qu'au moins un canal optique émerge dudit multiplexeur Nx1 en ayant un état de polarisation qui est substantiellement orthogonal à un état de polarisation d'au moins un autre canal tout en conservant ladite valeur moyenne essentiellement égale à zéro dudit état de polarisation de ladite pluralité de canaux optiques sur chaque cycle de modulation.

FIG.1

100

HIGH BIREFRINGENCE FIBER

EP 0 717 524 B1

## FIG.2

## FIG.4

*FIG.3*

300

FIG.5

500

501-1 OPTICAL SOURCE λ₁

502-1

585-1 DATA MODULATOR

506-1 POLARIZATION CONTROLLER

515

501-2 OPTICAL SOURCE λ₂

502-2

585-2 DATA MODULATOR

506-2 POLARIZATION CONTROLLER

N × 1 MULTIPLEXER

522

517 POLARIZATION CONTROLLER

512

-N OPTICAL SOURCE

502-N

585-N DATA MODULATOR

506-N POLARIZATION CONTROLLER

HIGH BIREFRINGENCE FIBER

522

529 POLARIZATION CONTROLLER

DATA SOURCE 580-1

519 POLARIZATION MODULATOR

521 POLARIZATION CONTROLLER

580-N

DATA SOURCE

DATA SOURCE 580-2

520 PHASE SHIFTER

580-N DATA SOURCE

575 CLOCK ω ω

EP 0 717 524 B1

14

FIG.6

600

*FIG. 7*

700

**N × 1 MULTIPLEXER** — 715

POLARIZATION CONTROLLER — 740

POLARIZATION CONTROLLER — 714-1 (311-1)
POLARIZATION CONTROLLER — 714-2
POLARIZATION CONTROLLER — 714-N

POLARIZATION MODULATOR — 710-1
POLARIZATION MODULATOR — 710-2
POLARIZATION MODULATOR — 710-N

POLARIZATION MODULATION CONTROLLER — 720

CLOCK — 775

DATA MODULATOR — 785-1
DATA MODULATOR — 785-2
DATA MODULATOR — 785-N

DATA SOURCE — 780-1
DATA SOURCE — 780-2
DATA SOURCE — 780-N

OPTICAL SOURCE $\lambda_1$ — 701-1
OPTICAL SOURCE $\lambda_2$ — 701-2
OPTICAL SOURCE $\lambda_N$ — 701-N

702-1, 702-2, 702-N

$\omega$

16